# EUROPÄISCHE PATENTSCHRIFT

(11) **EP 0 564 886 B1**
(45) Veröffentlichungstag und Bekanntmachung des Hinweises auf die Patenterteilung: **13.09.1995**
(21) Anmeldenummer: 93104698.1
(22) Anmeldetag: 22.03.1993
(51) Int. Cl.: B65D 71/70, B65D 57/00

(54) **Trägerplatte zur Aufnahme von elektrischen Lampen**
Tray for electric lightbulbs
Plateau pour le stockage d'ampoules électriques

(30) Priorität: 31.03.1992 DE 9204370 U
(43) Veröffentlichungstag der Anmeldung: 13.10.1993
(73) Patentinhaber: Patent-Treuhand-Gesellschaft für elektrische Glühlampen mbH, 81543 München (DE)
(72) Erfinder: Fiebig, Werner, W-8000 München 90 (DE); Baumann, Walter, W-8900 Augsburg 21 (DE)

(56) Entgegenhaltungen:
- DE-U- 7 832 926
- FR-A- 1 260 720
- US-A- 2 665 806
- US-A- 3 672 530
- US-A- 4 673 087

## Beschreibung

Die Erfindung betrifft eine Palette gemäß dem Oberbegriff des Schutzanspruchs 1.

Ein Transportbehälter, der mehrere derartige Paletten als Einsatz besitzt, ist beispielsweise aus dem DE-GM 78 32 926 bekannt. Diese Paletten weisen eine Vielzahl von rechteckigen Öffnungen auf, in die vorzugsweise mit einer Zentrierscheibe versehene Kfz-Lampen eingehängt werden.

Ein gravierender Nachteil dieser Paletten besteht darin, daß es sich hierbei um Transportbehälter aus Pappe handelt, die nur zum einmaligen Gebrauch bestimmt sind. Damit entsprechen sie nicht dem deutschen Gesetz zur Verpackungsvermeidung.

Es ist die Aufgabe der Erfindung eine Palette für elektrische Lampen bereitzustellen, die als Mehrweg-Behälter zum Transport und gleichermaßen auch zur Ausstellung dieser Lampen in Verkaufsräumen geeignet ist.

Diese Aufgabe wird erfindungsgemäß durch die kennzeichnenden Merkmale des Schutzanspruchs 1 gelöst. Besonders vorteilhafte Ausführungen der Erfindung sind in den Unteransprüchen beschrieben.

Die erfindungsgemäße Palette besteht aus Kunststoff, so daß sie als Mehrweg-Behälter für elektrische Lampen verwendet werden kann. Sie besitzt einen Stapelrahmen aus Kunststoff, der vorteilhaft mittels Steck- und Schnappvorrichtungen mit der Palette lösbar verbunden und an seinen Stirnseiten mit Griffmulden versehen ist. Dieser Stapelrahmen bildet die Seitenwände der erfindungsgemäßen Palette und ermöglicht ein Aufeinanderstapeln mehrerer solcher Paletten zu einer größeren Transporteinheit. Zur Ausstellung in den Verkaufsräumen werden die Stapelrahmen entfernt, damit die Lampen auf den Paletten besser eingesehen werden können.
Der Stapelrahmen besitzt vorteilhaft mehrere Scharniere, die ein Zusammenklappen des Rahmens ermöglichen, so daß er platzsparend aufbewahrt werden kann.

Die erfindungsgemäßen Paletten werden beim Lampenhersteller beispielsweise mit Allgebrauchsglühlampen bestückt, so dann mit ihren aufschnappbaren Stapelrahmen versehen und zu einer größeren Transporteinheit zusammengesetzt, um an den Großhandel oder an Handelsketten etc. gesandt zu werden.
Zur Ausstellung in den Verkaufsräumen werden die Stapelrahmen von den Paletten entfernt, so daß der Konsument die auf den Paletten angeordneten Lampen besser einsehen und herausnehmen kann.
Die leeren Paletten werden schließlich dem Lampenhersteller zur erneuten Bestückung überlassen.
Es ist auch möglich, die erfindungsgemäßen Paletten zum Lampenrecycling einzusetzen. So können beispielsweise defekte oder verbrauchte Lampen vom Handel zurückgenommen und mit Hilfe der erfindungsgemäßen Paletten an den Lampenhersteller zurückgeschickt werden, um die Lampen einem Recyclingprozeß zuzuführen.

Die Erfindung wird nachstehend anhand eines besonders bevorzugten Ausführungsbeispiels näher erläutert. Es zeigen:
- Figur 1: eine Draufsicht auf einen Ausschnitt einer erfindungsgemäßen Palette ohne Stapelrahmen

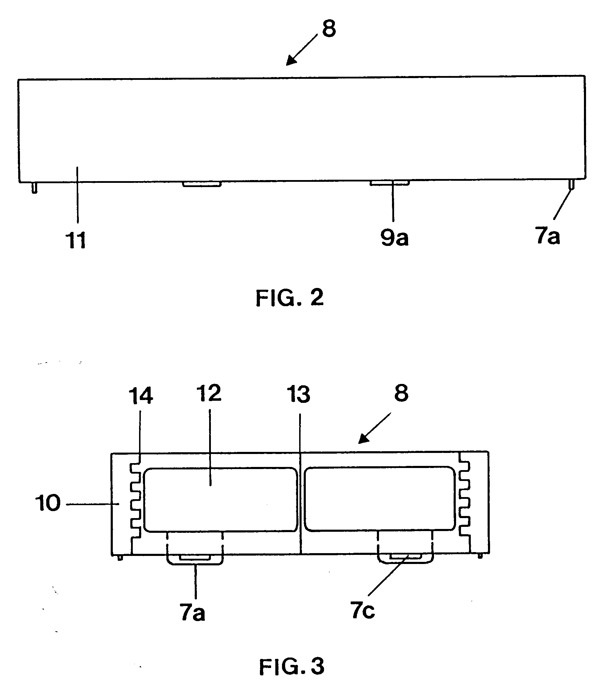

- Figur 2: eine Längsseitenansicht des Stapelrahmens zur erfindungsgemäßen Palette entsprechend Figur 1
- Figur 3: eine Stirnseitenansicht des Stapelrahmens gemäß Figur 2
- Figur 4: eine Draufsicht auf den zusammengelegten Stapelrahmen gemäß den Figuren 2 und 3
- Figur 5: einen Querschnitt durch die Palette (ausschnittsweise) gemäß Figur 1, mit eingesetzten Lampen.

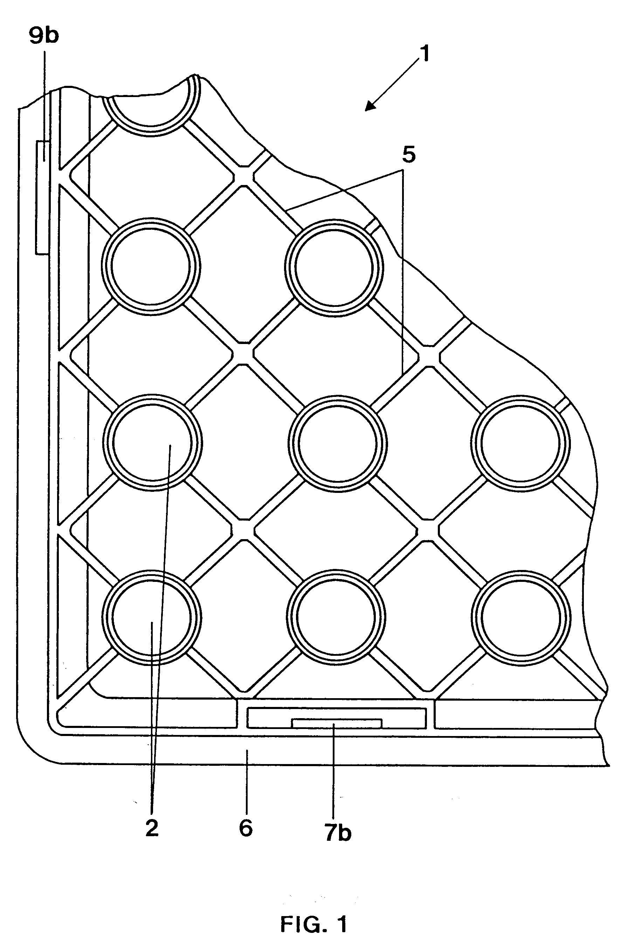

Figur 1 zeigt eine Draufsicht auf einen Ausschnitt einer erfindungsgemäßen Palette (ohne Stapelrahmen). Sie besitzt einen rechteckigen Querschnitt und besteht aus Kunststoff. Diese erfindungsgemäße Kunststoffpalette 1 weist vierundfünfzig paßgerechte Aufnahmevorrichtungen 2 für die E 27-Schraubsockel 3 von Allgebrauchsglühlampen 4 auf, wobei diese Aufnahmevorrichtungen 2 in sechs Zeilen zu je neun Spalten angeordnet und mittels X-förmiger Streben 5 untereinander verbunden sind. Die Seitenabmessungen dieser Palette 1 betragen 60 cm x 40 cm x 3 cm. Ausserdem besitzt die Palette 1 entlang ihres Umfanges einen Absatz 6, auf dem ein Stapelrahmen 8 mit seiner Unterkante aufsitzt.

Der Stapelrahmen 8 besteht ebenfalls aus Kunststoff und besitzt einen rechteckigen Querschnitt. Die beiden Stirnseiten 10 des Stapelrahmens 8 sind entlang ihrer Unterkante mit jeweils zwei Schnappriegeln 7a ausgestattet, in deren Aufnahmeschlitz 7c beim Aufsetzen des Stapelrahmens 8 auf den Absatz 6 der Palette 1 jeweils eine an die Palette 1 angeformte Zunge 7b einschnappt.

Die Längsseiten 11 des Stapelrahmens 8 besitzen entlang ihrer Unterkante jeweils zwei Stecklaschen 9a, die mit Klemmsitz in je eine Vertiefung 9b des Absatzes 6 eingreifen.

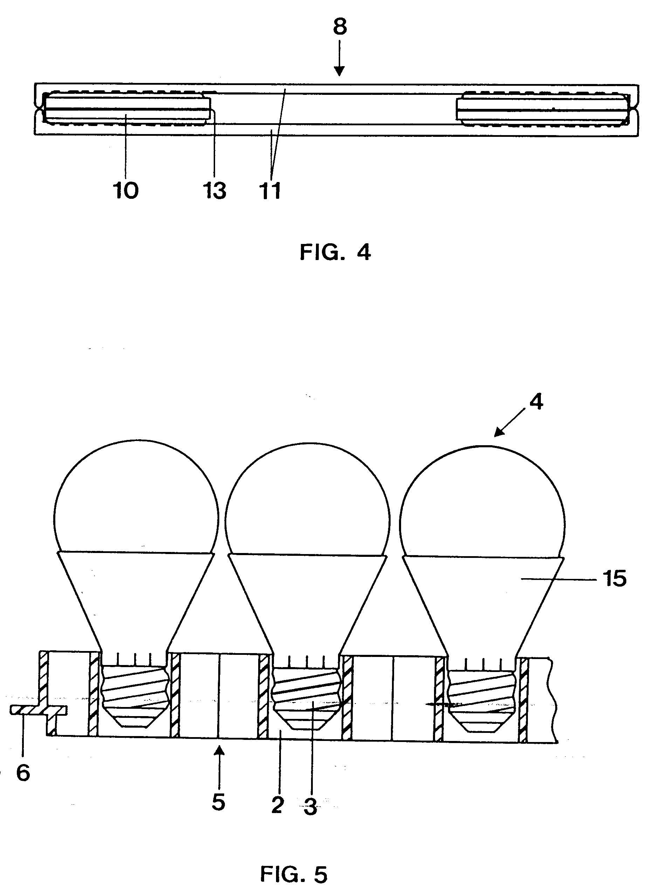

Die beiden Längsseiten 11 des Stapelrahmens 8 sind geschlossen, während die beiden Stirnseiten 10 Griffmulden 12 aufweisen und jeweils mit einem mittig angeordneten Filmscharnier 13 und je zwei weiteren Scharnieren 14 ausgerüstet sind, die ein Zusammenklappen des Stapelrahmens 8 ermöglichen (Figur 4).

Figur 5 zeigt ausschnittsweise einen Querschnitt durch die erfindungsgemäße Palette 1 mit mehreren eingesetzten handelsüblichen Allgebrauchsglühlampen 4, wobei die Glühlampen 4 teilweise von einem trichterförmigen Werbeträger 15 umhüllt werden. Dieser Werbeträger 15 dient zur Produktkennzeichnung für den Konsumenten.

Die Erfindung ist nicht auf das angegebene Ausführungsbeispiel beschränkt.

Die erfindungsgemäße Palette kann mit geringem Aufwand an die Erfordernisse aller handelsüblichen, einseitig gesockelten elektrischen Lampen (insbesondere seien hier sämtliche einseitig gesockelten Allgebrauchsglühlampen, Halogenglühlampen und auch kompakte Leuchtstofflampen genannt) angepaßt werden.

Außerdem ist es auch möglich, jede einzelne der erfindungsgemäßen Paletten oder aber nur die jeweils oberste Palette in einem Palettenstapel mit einem Deckel zu versehen.

## Patentansprüche

1. Palette (1) mit einer Vielzahl von in einer horizontalen Ebene angeordneten Aufnahmevorrichtungen (2) zur Aufnahme von elektrischen Lampen (4), dadurch gekennzeichnet, daß die Palette (1) aus Kunststoff besteht und einen abnehmbaren Stapelrahmen (8) aus Kunststoff besitzt, der mittels Arretiervorrichtungen (7a, 7b, 9a, 9b) an der Palette (1) lösbar befestigt ist.

2. Palette (1) nach Anspruch 1, dadurch gekennzeichnet, daß die Arretiervorrichtungen (7a, 7b, 9a, 9b) Schnapp- (7a, 7b) und/oder Steckvorrichtungen (9a, 9b) sind.

3. Palette (1) nach Anspruch 2, dadurch gekennzeichnet, daß die Palette (1) und ihr Stapelrahmen (8) Stirnseiten (10) mit jeweils zwei Schnappvorrichtungen (7a, 7b) aufweisen.

4. Palette (1) nach Anspruch 2, dadurch gekennzeichnet, daß jede Schnappvorrichtung (7a, 7b) aus einer Zunge (7b) und einem Schnappriegel (7a) besteht, wobei die Zunge (7b) in einem Aufnahmeschlitz (7c) des Schnappriegels (7a) einschnappt.

5. Palette (1) nach Anspruch 2, dadurch gekennzeichnet, daß die Palette (1) und ihr Stapelrahmen (8) Längsseiten (11) mit jeweils zwei oder mehr Steckvorrichtungen (9a, 9b) aufweisen.

6. Palette (1) nach Anspruch 5, dadurch gekennzeichnet, daß jede Steckvorrichtung (9a, 9b) aus einer Vertiefung (9b) in der Palettenoberfläche und aus einer Stecklasche (9a), die an einer Längsseite (11) des Stapelrahmens (8) angeformt ist und mit Klemmsitz in die zugehörige Vertiefung (9b) eingreift, besteht.

7. Palette (1) nach Anspruch 1, dadurch gekennzeichnet, daß der Stapelrahmen (8) mehrere Scharniere (13, 14) aufweist, die ein Zusammenklappen des Stapelrahmens (8) ermöglichen.

8. Palette (1) nach Anspruch 1, dadurch gekennzeichnet, daß die Palette (1) einen Deckel besitzt.

## Claims

1. Pallet (1) having a multiplicity of receiving devices (2), arranged in a horizontal plane, for receiving electric lamps (4), characterized in that the pallet (1) consists of plastic and has a removable stacking frame (8) of plastic, which is detachably fastened on the pallet (1) by means of arresting devices (7a, 7b, 9a, 9b).

2. Pallet (1) according to Claim 1, characterized in that the arresting devices (7a, 7b, 9a, 9b) are snap devices (7a, 7b) and/or insert devices (9a, 9b).

3. Pallet (1) according to Claim 2, characterized in that the pallet (1) and its stacking frame (8) have end faces (10) with in each case two snap devices (7a, 7b).

4. Pallet (1) according to Claim 2, characterized in that each snap device (7a, 7b) comprises a tongue (7b) and a snap catch (7a), the tongue (7b) snapping into a receiving slot (7c) of the snap catch (7a).

5. Pallet (1) according to Claim 2, characterized in that the pallet (1) and its stacking frame (8) have longitudinal sides (11) with in each case two or more insert devices (9a, 9b).

6. Pallet (1) according to Claim 5, characterized in that each insert device (9a, 9b) comprises a depression (9b) in the pallet surface and an insert lug (9a), which is integrally formed on one longitudinal side (11) of the stacking frame (8) and engages with a clamping fit into the associated depression (9b).

7. Pallet (1) according to Claim 1, characterized in that the stacking frame (8) has a plurality of hinges (13, 14), which permit a folding up of the stacking frame (8).

8. Pallet (1) according to Claim 1, characterized in that the pallet (1) has a cover.

## Revendications

1. Palette (1) comportant une multiplicité de dispositifs de logement (2) disposés dans un plan horizontal et servant à loger des ampoules électriques (4), caractérisée par le fait que la palette (1) est réalisée en matière plastique et possède un cadre d'empilage amovible (8) en matière plastique, qui est fixé de façon amovible à la palette (1) au moyen de dispositifs de retenue (7a,7b,9a,9b).

2. Palette (1) suivant la revendication 1, caractérisée par le fait que les dispositifs de retenue (7a, 7b,9a,9b) sont des dispositifs d'encliquetage (7a,7b) et/ou des dispositifs d'enfichage (9a,9b).

3. Palette (1) suivant la revendication 2, caractérisée par le fait que la palette (1) et son cadre d'empilage (8) possèdent des faces frontales (10) comportant respectivement deux dispositifs d'encliquetage (7a,7b).

4. Palette (1) suivant la revendication 2, caractérisée par le fait que chaque dispositif d'encliquetage (7a,7b) est constitué par une languette (7b) et un verrou à déclic (7a), la languette (7b) s'encliquetant dans une fente de logement (7c) du verrou à déclic (7a).

5. Palette (1) suivant la revendication 2, caractérisée par le fait que la palette (1) et son cadre (8) possèdent des grands côtés (11) équipés respectivement de deux ou plusieurs dispositifs à enfichage (9a,9b).

6. Palette (1) suivant la revendication 5, caractérisée par le fait que chaque dispositif d'enfichage (9a,9b) est constitué par un renfoncement (9b) aménagé dans la surface de la palette, et par une patte d'enfichage (9a), qui est formée sur un côté longitudinal (11) du cadre d'empilage (8) et coagit, selon un ajustement serré, avec le renfoncement associé (9b).

7. Palette (1) suivant la revendication 1, caractérisée par le fait que le cadre d'empilage (8) comporte plusieurs charnières (13,14) qui permettent un assemblage par rabattement du cadre d'empilage (8).

8. Palette (1) suivant la revendication 1, caractérisée par le fait que la palette possède un couvercle.
